# EUROPÄISCHE PATENTSCHRIFT

(11) **EP 1 202 868 B1**
(45) Veröffentlichungstag und Bekanntmachung des Hinweises auf die Patenterteilung: **31.08.2005**
(21) Anmeldenummer: 00952924.9
(22) Anmeldetag: 14.07.2000
(51) Int. Cl.: B60G 15/12, B60G 17/04, F16F 9/348, F16F 9/02

(54) **FEDER-DÄMPFER-EINHEIT FÜR EIN KRAFTFAHRZEUG**
SHOCK-ABSORBING ELEMENT FOR A MOTOR VEHICLE
UNITE RESSORT-AMORTISSEUR POUR VEHICULE A MOTEUR

(30) Priorität: 16.07.1999 DE 19932717
(43) Veröffentlichungstag der Anmeldung: 08.05.2002
(73) Patentinhaber: ContiTech Luftfedersysteme GmbH, 30165 Hannover (DE)
(72) Erfinder: GOLD, Henning, D-55411 Bingen (DE); BEETZ, Stefan, D-55743 Idar-Oberstein (DE); KOBS, Peter, D-18258 Schwaan (DE); GOEBEL, Stephan, D-55411 Bingen (DE); BRAUN, Patrik, D-55130 Mainz (DE)
(74) Vertreter: Jaap, Reinhard
(86) Internationale Anmeldenummer: PCT/DE2000/002280
(87) Internationale Veröffentlichungsnummer: WO 2001/005609

(56) Entgegenhaltungen:
- EP-A- 0 257 779
- EP-A- 0 671 572
- DE-A- 4 418 120
- FR-A- 2 705 127
- US-A- 4 844 428

## Beschreibung

Die Erfindung bezieht sich auf eine Feder-Dämpfer-Einheit nach dem Oberbegriff des Anspruchs 1. Eine derartige Feder-Dämpfer-Einheit ist aus der Schrift EP-A-0 671 572 bekannt.
Feder-Dämpfer-Einheiten dieser Art werden vorwiegend in der Kraftfahrzeugtechnik eingesetzt.

Feder-Dämpfer-Einheiten sind insbesondere bekannt durch die DE 36 41 623, die DE 38 24 932, die DE 43 34 007 und die DE 8413300 U1.
Grundsätzlich besteht eine solche Feder-Dämpfer-Einheit aus einem zylindrischen Gehäuse mit einem Deckel und einem im Gehäuse eingepaßten, doppeltwirkenden Kolben mit einer einseitigen, den Deckel durchdringenden Kolbenstange. Das Gehäuse einerseits und die Kolbenstange andererseits sind fest mit einem Karosserieteil bzw. mit der Radaufhängung verbunden, wobei das freiliegende Teil der Kolbenstange durch einen Balg abgedeckt ist. Dazu ist der Balg einerseits am Deckel des Gehäuses und andererseits am Kopf der Kolbernstange befestigt.
Der Kolben teilt den Zylinderraum des Gehäuses in einen beim Einfedern sich verkleinernden und einen sich vergrößernden Druckraum auf, die beide nach außen über einen Gehäuseanschluß mit einer Druckluftquelle und untereinander durch eine oder mehrere, im Kolben angeordnete Überströmdrosseln verbunden sind.

Aus der DE 36 41 623 sind dazu einfache Drosselbohrungen bekannt, die in beide Bewegungsrichtungen die gleiche Drosselwirkung gegenüber dem ausgleichenden Luftstrom besitzen, wodurch die Kolbenbewegung in beiden Richtungen in gleicher Stärke gedämpft wird. Das ist nachteilig, da wegen der geforderten Bodenhaftung der Räder für das Einfedern eine gegenüber dem Ausfedern geringere Dämpfbewegung erwünscht ist.

Eine solche Forderung erfüllende Überströmdrossel zeigt die DE 84 13 300 U1, bei der eine mittige Drosselbohrung einerseits des Kolbens in einen Ringraum andererseits des Kolbens mündet und die Drosselbohrung vom Ringraum durch eine flexible Ringscheibe abgedeckt ist. Diese Ringscheibe hat einerseits einen äußeren Anschlag und andererseits einen inneren Anschlag, sodaß sich die Ringscheibe in einer Durchflußrichtung am äußeren Rand und in der anderen Durchflußrichtung am inneren Rand vom jeweiligen Anschlag abhebt. Durch den unterschiedlichen Abstand der beiden Anschläge gegenüber der Mitte der Ringscheibe ergeben sich unterschiedliche Hebelarme, die für beide Durchflußrichtungen eine unterschiedliche Öffnungscharakteristik für die Ringscheibe bewirken.
Es ist bei dieser gängigen Art der Überströmdrosseln von Nachteil, daß das Verhältnis der beiden Öffnungscharakteristiken mit einer einmal gewählten Konstruktion eine festgelegte Größe ist und damit nicht mehr veränderbar und an verschieden Anwendungsfälle anpaßbar ist.

Aus den US-A-4,844,428, EP 0 257 779 A3, FR 2 705 127 A1 und EP 0 671 572 A1 sind weitere Feder-Dämpfer-Einheiten bekannt, die zwei entgegengerichtete Überströmdrosseln im Kolben für beide Druckräume aufweisen. So zeigt die US-A-4,844,428 zwei Überströmdrosseln, die jeweils durch eine Schräglochbohrung und eine federbelastete Dichtscheibe bestehen. Dagegen beschreibt die gattungsgemäßen EP 0 671 572 A1 zwei entgegengerichtete und durch mehrere Dichtsscheiben verschlossene Überströmdrosseln, die jeweils aus mehreren gleichmäßig auf einem Teilkreis verteilten Durchgangsbohrungen bestehen. Dabei sind die Durchgangsbohrungen für die eine Richtung als Schräglochbohrungen und für die andere Richtung als achsparallele Bohrungen ausgeführt und besitzen auch für jede Richtung unterschiedliche Durchmesser. Daher sind auch die Dichtscheiben für jede Richtung unterschiedlich groß und stark ausgeführt. Diese Feder-Dämpfer-Einheiten sind somit kompliziert im Aufbau und lassen sich daher nur mit großem Aufwand herstellen. Außerdem besitzt jede der beiden Überströmdrosseln eine spezielle konstruktive Ausführung, wodurch sich unterschiedliche Kanalführungen und Abmessungen ergeben. Das beeinflusst aber die Öffnungscharakteristik der Überströmdrosseln und damit das Dämpfungsverhalten des Kolbens. Damit können diese Feder-Dämpfer-Einheiten nur für spezielle Anwendungsfälle eingesetzt werden.

Der Erfindung liegt daher die Aufgabe zu Grunde, eine Feder-Dämpfer-Einheit der vorliegenden Art so weiterzubilden, dass ein einfacher konstruktiver Aufbau mit gleichmäßigen Strukturen ermöglicht wird, wobei der Dämpfer in einfacher Weise auf die unterschiedlichsten Anwendungsfälle anpassbar ist.

Diese Aufgabe wird durch die kennzeichnenden Merkmale des Anspruchs 1 gelöst.
Zweckdienliche Ausgestaltungen der Erfindung ergeben sich aus den Merkmalen der Ansprüche 2 bis 7.

Die Erfindung beseitigt die genannten Nachteile des Standes der Technik.
Von besonderem funktionellen Vorteil ist die getrennte Ausführung der Überströmdrossel. Damit kann durch Veränderung der Dichtscheibenpakete der Strömungswiderstand an jeder Überströmdrossel und damit die Dämpfcharakteristik für jede Bewegungsrichtung getrennt eingestellt werden. Eine funktionelle Abhängigkeit beider Überströmdrosseln gibt es nicht.
Dabei ist die Feder-Dämpfer-Einheit relativ einfach und damit kostengünstig im Aufbau und in der Herstellung.

Die Erfindung soll nachstehend an Hand mehrerer Ausführungsbeispiele näher erläutert werden.

Dazu zeigen
- Fig. 1:: eine Feder-Dämpfer-Einheit im Schnitt,
- Fig. 2.: den Kolben der Feder-Dämpfer-Einheit in einer ersten Ausführungsform,
- Fig. 3:: einen Teilschnitt X aus der Fig. 2,
- Fig. 4:: den Kolben der Feder-Dämpfer-Einheit in einer zweiten Ausführungsform und
- Fig. 5:: die Feder-Dämpfer-Einheit mit elektromagnetisch unterstützten Dichtscheiben.

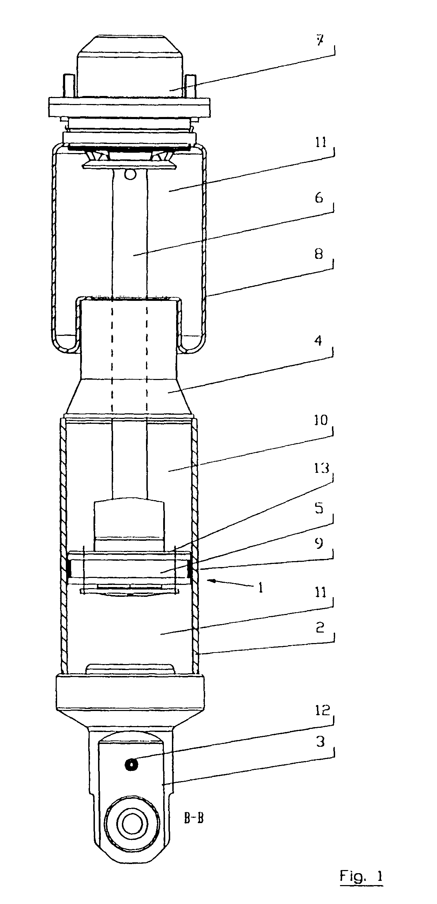

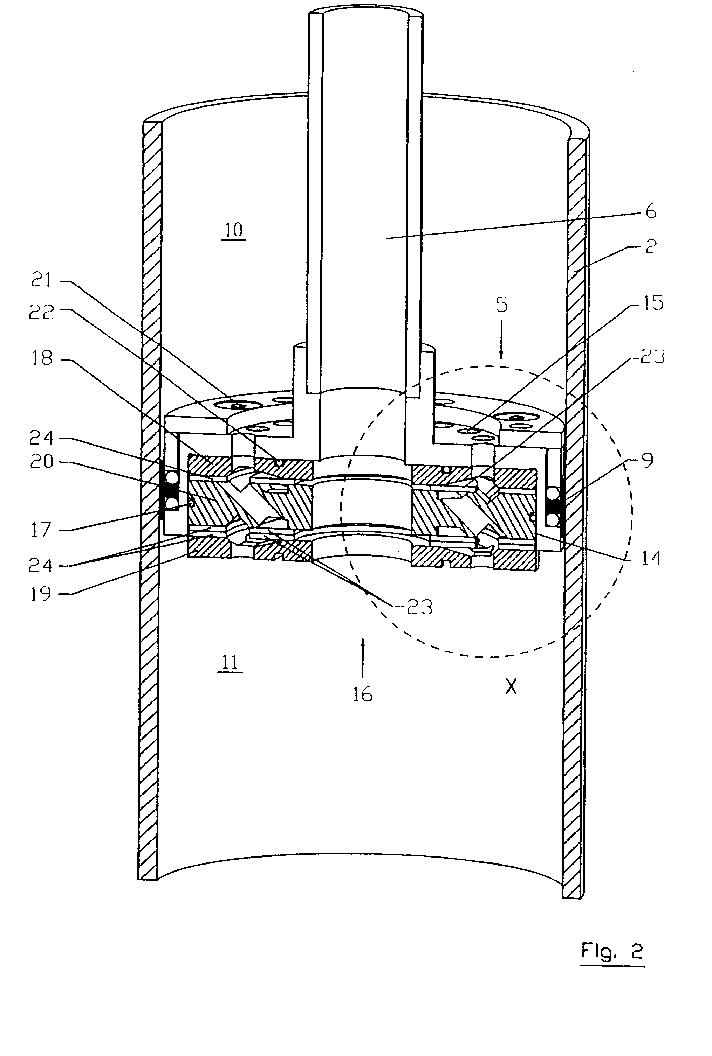

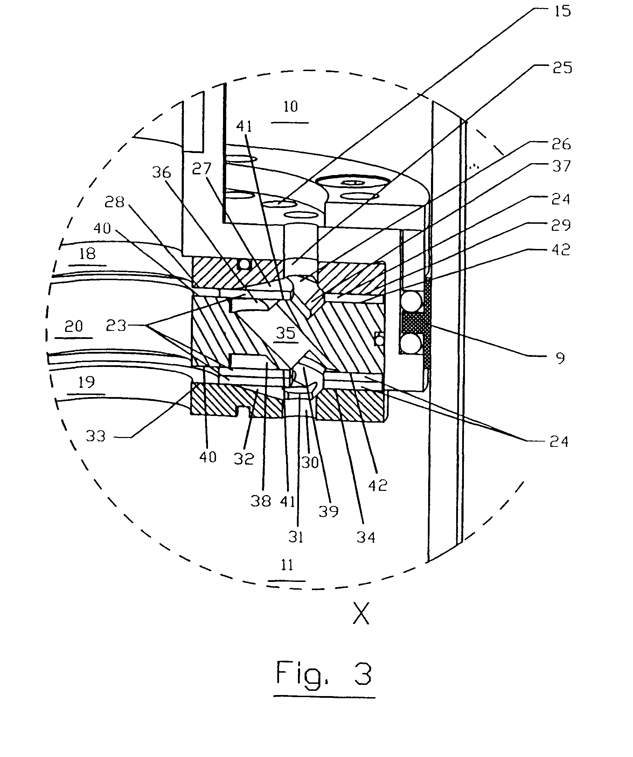

Nach der Fig. 1 besteht die Feder-Dämpfer-Einheit aus einem zylindrischen Gehäuse 1 mit einer Gehäusewand 2, einem Gehäusefuß 3 für die Montage mit einer Radaufhängung eines Kraftfahrzeuges und einem dem Gehäusefuß 3 gegenüberliegenden Gehäusedeckel 4. In herkömmlicher Art ist im Gehäuse 1 ein Kolben 5 eingepaßt, der einerseits eine Kolbenstange 6 aufweist. Diese Kolbenstange 6 durchdringt den Gehäusedeckel 4 und ist an ihrem freien Ende mit einem Kolbenstangenkopf 7 ausgerüstet, der zum Anschlag an die Karosserie des Kraftfahrzeuges vorgesehen ist. Das aus dem Gehäuse 5 ragende Teil der Kolbenstange 6 durchdringt eine Druckkammer, die durch einen Balg 8 in der Art umschlossen ist, daß der Balg 8 einerseits am Gehäusedeckel 4 und anderseits am Kolbenstangekopf 7 befestigt ist. Der Kolben 5 ist gegenüber der Zylinderwand 2 mit einem Kolbenring 9 dichtend ausgeführt und teilt so den vorhandenen Innenraum des Gehäuses 1 in einen ersten Druckraum 10 und einen zweiten Druckraum 11. Der zweite Druckraum 11 ist über eine in der Kolbenstange 6 befindlichen Bohrung mit der vom Balg 8 umgebenden Druckkammer verbunden. Über einen Druckluftanschluß 12 ist einer der beiden Druckräume 10, 11 mit einer Druckluftquelle verbunden, die einen gewünschten Druck in beiden Druckräumen 10, 11 erzeugt und konstant hält. Im Kolben 5 befindet sich eine Überströmdrossel 13, die beide Druckräume 10 und 11 miteinander verbindet und über die bei einer entsprechenden Bewegung des Kolbens ein Volumenstromausgleich der eingeschlossenen Druckluft erfolgt.
Eine solche Überströmdrossel 13 ist in einer ersten Form gemäß der Fig. 2 und 3 so ausgebildet, daß der Kolben 5 eine topfartige Form mit einem Hohlraum 14 besitzt, der mit seiner offenen Seite dem Gehäusefuß 3 zugewandt ist. Die geschlossene, auf der Kolbenstangenseite befindliche Stirnfläche des Kolbens 5 ist mit mehreren gleichmäßig auf einem Teilkreis verteilt angeordneten, axialen Durchflußbohrungen 15 ausgerüstet.
Im Hohlraum 14 des Kolbens 5 befindet sich ein Drosseleinsatz 16, der an seiner Mantelfläche ein Dichtelement 17 trägt und damit den Drosseleinsatz 16 gegenüber dem Hohlraum 14 des Kolbens abdichtet. Dieser Drosseleinsatz 16 ist mehrteilig ausgeführt und besteht aus einem im Hohlraum 14 innen liegenden ersten Deckelstück 18, einem außen liegenden zweiten Deckelstück 19 sowie einem dazwischen liegenden Mittelstück 20, wobei das erste Deckelstück 18, das Mittelstück 20 und das zweite Deckelstück 19 untereinander verschraubt und gemeinsam über Schrauben 21 am Kolben 5 befestigt sind. Das erste Deckelstück 18 ist mit einem radial wirkenden Dichtelement 22 ausgerüstet, das den Zwischenraum zwischen dem Drosseleinsatz 16 und der geschlossenen Stirnfläche des Kolbens 5 verschließt. Zwischen dem ersten Deckelstück 18 und dem Mittelstück 20 sowie zwischen dem Mittelstück 20 und dem zweiten Deckelstück 19 sind jeweils ein oder mehrere Dichtscheiben 23 und Abstandsscheiben 24 angeordnet und gemeinsam mit dem Drosseleinsatz 16 verspannt.
Im Drosseleinsatz 16 sind in achsparaller Ausdehnung mehrere Drosselkanäle eingearbeitet, die im Zusammenwirken mit den axialen Durchflußbohrungen 15 und den Dichtscheiben 23 den ersten Druckraum 10 und den zweiten Druckraum 11 verbinden oder verschließen.

Dazu besitzt zunächst das erste Deckelstück 18 mehrere achsparallel ausgerichtete und gleichmäßig auf einem Teilkreis verteilt angeordnete Durchgangsbohrungen 25, die einerseits über einen nicht dargestellten Ringkanal im Kolben 5 oder im ersten Deckelstück 18 ständig mit den Durchgangsbohrungen 15 im Kolben 5 verbunden sind. Andererseits münden die Durchgangsbohrungen 25 des ersten Deckelstückes 18 in eine umlaufende Ringnut 26, die im Querschnitt zur Achse hin eine konische Anschlagfläche 27 für die Dichtscheiben 23 besitzt. Zu beiden Seiten der Ringnut 26 befinden sich eine innere Stegfläche 28 sowie eine äußere Stegfläche 29.

Das zweite Deckelstück 19 besitzt wie im Deckelstück 18 ausgebildete und angeordnete Durchgangsbohrungen 30, die auf der Kolbenstangenseite in eine gleichermaßen ausgebildete Ringnut 31 mit einer konischen Anschlagfläche 32 für die Dichtscheiben 23 münden. Durch die Ringnut 31 ergeben sich wiederum eine innere Stegfläche 33 und eine äußere Stegfläche 34.

Das zwischen den beiden Deckelstücken 18 und 19 liegende Mittelstück 20 ist mit weiteren Durchgangsbohrungen 35 ausgerüstet, die gleichmäßig verteilt angeordnet und als Schräglochbohrungen ausgeführt sind. Dabei verlaufen die Durchgangsbohrungen 35 wechselweise, so wie es in der Fig. 2 deutlich ist, von einem größeren Teilkreisdurchmesser einer ersten Seite zu einem kleineren Teilkreisdurchmesser der zweiten Seite und die benachbarten Durchgangsbohrungen 35 entgegengesetzt von einem kleineren Teilkreisdurchmesser der ersten Seite zu einem größeren Teilkreisdurchmesser der zweiten Seite. Damit ergeben sich zu beiden Seiten des Mittelstückes 20 eine innere Reihe und eine äußere Reihe von Mündungen der Durchgangsbohrungen 35, die jeweils durch eine innere Ringnut 36 und eine äußere Ringnut 37 auf der ersten Seite und eine innere Ringnut 38 und eine äußere Ringnut 39 auf der zweiten Seite zusammengefaßt sind. Durch die beiden benachbarten Ringnuten 36, 37 bzw. 38, 39 auf jeder Seite ergeben sich jeweils eine innere Stegfläche 40, eine mittlere Stegfläche 41 und eine äußere Stegfläche 42.

Im montierten Zustand sind ein oder mehrere Dichtscheiben 23 zwischen dem ersten Deckelstück 18 und dem Mittelstück 20 sowie zwischen dem zweiten Deckelstück 19 und dem Mittelstück 20 in der Art eingeordnet, daß der innenliegende Bereich der Dichtscheibe 23 zwischen der inneren Stegfläche 28 des ersten Deckelstückes 18 und der inneren Stegfläche 40 des Mittelstückes 20 fest eingespannt und der äußere Bereich der Dichtscheibe 23 auf der mittleren Stegfläche 41 des Mittelstückes 20 zur Auflage kommt. Die Abstandsscheiben 24 besitzen die gleiche oder eine geringere Stärke wie die Dichtscheiben 23 und sind zwischen den äußeren Stegflächen 29 des ersten Deckelstückes 18 und den äußeren Stegflächen 42 des Mittelstückes 20 eingespannt.
In gleicher Weise sind die Dichtscheiben 23 zwischen dem zweiten Deckelstück 19 und dem Mittelstück 20 zwischen den beiden gegenüberliegenden Stegflächen 33 und 40 eingespannt und auf die mittlere Stegfläche 41 des Mittelstückes 20 zur Auflage gebracht.
Auf die Dichtscheiben 23 kann eine ausgewählte Vorspannung gebracht werden, in dem die gegenüberliegenden inneren Stegflächen 28, 33 der beiden Deckelstücke 18, 19 einen längeren radialen Abstand von der Mittelachse erhalten als die inneren Stegflächen 40 zu beiden Seiten des Mittelstückes 20 ausgeführt sind.
Eine ausgewählte Vorspannung an den Dichtscheiben 23 kann auch dadurch erzeugt werden, daß die Abstandsscheiben 24 eine gegenüber den Dichtscheiben 23 geringere Stärke besitzen.
Es ist auch möglich, eine Vorspannung der Dichtscheiben 23 zu erhalten, wenn an Stelle der Dichtscheiben 23 übliche Federscheiben eingesetzt werden. Dann kann auf einen ungleichen radialen Abstand zur Mittelachse der Stegflächen 28, 33 und 40 und/oder auf eine geringere Stärke der Abstandsscheiben 24 verzichtet werden.

Die durch die Bewegung des Kolbens z.B. im Druckraum 11 unter Druck gesetzte Druckluft strömt durch alle Durchgangsbohrungen 30 in die Ringnut 31 des zweiten Deckelstückes 19. Hier belastet die Druckluft die Dichtscheiben 23 und verschließt die innere Ringnut 38 der vorderen Seite des Mittelstückes 20. Damit ist die Verbindung zu jeder zweiten Durchgangsbohrung 35 unterbrochen. Die Druckluft strömt aber über die äußere Ringnut 39 zu jeder anderen zweiten Durchgangsbohrung 35 und gelangt in die innere Ringnut 36 der hinteren Seite des Mittelstückes 20 und belastet die Dichtscheiben 23 solange, bis sich ein für das Abheben der Dichtscheiben 23 erforderliche Druck eingestellt hat. Dabei hebt nur der äußere Rand der Dichtscheiben 23 von der mittleren Stegfläche 41 des Mittelstückes 20 ab und legt sich an die konische Anschlagfläche 27 des ersten Deckelstückes 18 an. Über die geöffneten Dichtscheiben 23 strömt die Druckluft über die Durchgangsbohrungen 25 bzw. 15 des ersten Deckelstückes 18 bzw. des Kolbens 5 in den Druckraum 10.
In umgekehrter Bewegungsrichtung des Kolbens 5 strömt die Druckluft in gleicher Weise aber über die anderen Durchgangsbohrungen 35 im Mittelstück 20 vom Druckraum 10 in den Druckraum 11.
So hält der Druckluftstrom in jeder zweiten Durchgarigsbohrung 35 des Mittelstückes 20 die in Strömungsrichtung nächstliegenden Dichtscheiben 23 geschlossen und öffnet und durchströmt die fernliegenden Dichtscheiben 23.

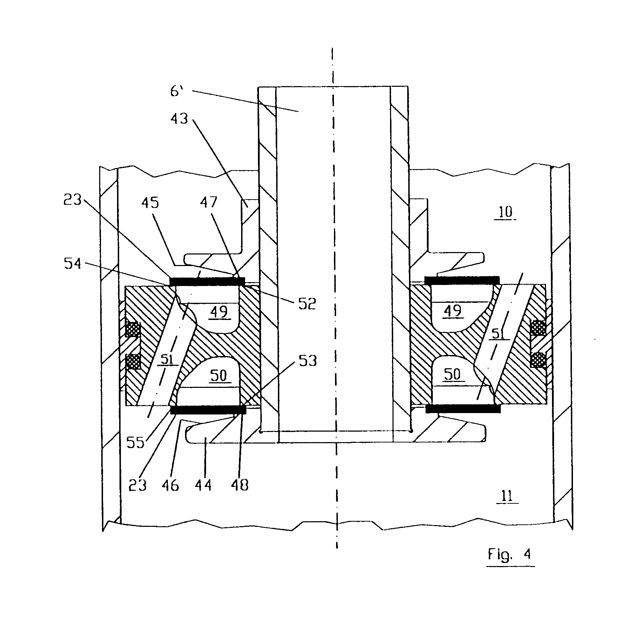

Gemäß der Fig. 4 besteht eine zweite Ausführungsform der Durchströmdrossel 13 aus einem Kolben 5', der in axialer Richtung auf der Kolbenstange 6' zwischen einem vorgespannten Kolbeneinspannring 43 und einem feststehenden Kolbeneinspannring 44 eingespannt ist und der die beiden Druckräume 10', 11' in bekannter Weise voneinander trennt. Beide Kolbeneinspannringe 43, 44 besitzen auf den sich zugewandten Stirnflächen in besonderer Weise ausgebildete konische Anschlagflächen 45 und 46 für die Ringscheiben 23, sowie jeweils eine sich in Richtung der Achse der Kolbenstange 6' anschließende Stegfläche 47 und 48. Der Kolben 5' hat an beiden Stirnflächen jeweils eine Ringnut 49 einerseits und eine Ringnut 50 andererseits. Dabei ist jeweils eine der Ringnuten 49, 50 über mehrere schrägverlaufende Durchgangsbohrungen 51 und unter Umgehung der gegenüberliegenden Ringnut 49, 50 mit dem gegenüberliegenden Druckraum 10', 11' verbunden. Alle Durchgangsbohrungen 51 befinden sich auf einem gleichen Teilkreis und sind auf diesem Teilkreis gleichmäßig verteilt angeordnet.
Beide Ringnuten 49, 50 sind durch die Dichtscheiben 23 dichtend abgedeckt, die jeweils im achsnahen Bereich durch die Stegflächen 47 und 48 der beiden Kolbeneinspannringe 43 und 44 und durch gegenüberliegende Stegflächen 52 und 53 am Kolben 5' eingespannt sind und die im achsfernen Bereich auf jeweils eine Stegfläche 54 und 55 des Kolbens 5' zur Auflage kommen.
Die Dichtscheiben 23 können wiederum einzeln oder im Paket eingesetzt sein. Durch eine entsprechende Wahl der radialen Abstände der die Dichtscheiben 23' einspannenden Stegflächen 47, 48 an den Kolbeneinspannringen 43, 44 und den Stegflächen 52 und 53 am Kolben 5'und in Verbindung mit der aufgebrachten Einspannkraft zwischen den beiden Kolbeneinspannringen 43, 44 kann wiederum eine die Dichtscheiben 23 beaufschlagende Vorspannung erzeugt werden.

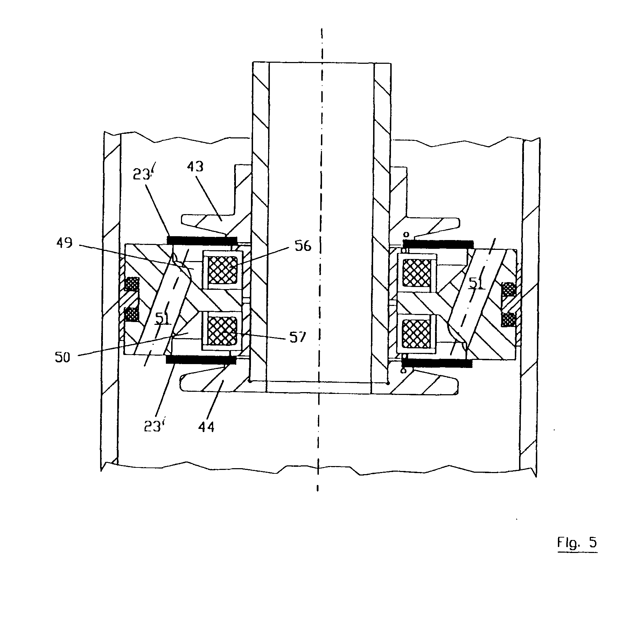

Gemäß der Fig. 5 ist die zweite Ausführungsform mit jeweils einem Paket von mindestens zwei Dichtscheiben 23 ausgestattet. Die Dichtscheiben 23 bestehen dabei aus einem magnetisierbaren Material. Außerdem ist jedem Paket von Dichtscheiben 23 ein Elektromagnet 56 und 57 zugeordnet, die jeweils den Kolben 5' und jedes Paket von Dichtscheiben 23 separat in einen extern steuerbaren Magnetfluß einschließen. Dabei verändert der Magnetfluß die Spannungen des Paketes von Dichtscheiben 23 und beeinflußt damit die Öffnungscharakteristik der Dichtscheiben 23 in einer auf einen konkreten Anwendungsfall abgestimmten Weise.

### Aufstellung der Bezugszeichen

- 1: Gehäuse
- 2: Gehäusewand
- 3: Gehäusefuß
- 4: Gehäusedeckel
- 5, 5': Kolben
- 6, 6': Kolbenstange
- 7: Kolbenstangenkopf
- 8: Balg
- 9: Kolbenring
- 10, 10': erster Druckraum
- 11, 11': zweiter Druckraum
- 12: Druckluftanschluß
- 13: Überströmdrossel
- 14: Hohlraum
- 15: Durchflußbohrung
- 16: Drosseleinsatz
- 17: Dichtelement
- 18: erstes Deckelstück
- 19: zweites Deckelstück
- 20: Mittelstück
- 21: Schraube
- 22: Dichtelement
- 23: Dichtscheibe
- 24: Abstandsscheibe
- 25: Durchgangsbohrung
- 26: Ringnut
- 27: konische Anschlagfläche
- 28: innere Stegfläche
- 29: äußere Stegfläche
- 30: Durchgangsbohrung
- 31: Ringnut
- 32: konische Anschlagfläche
- 33: innere Stegfläche
- 34: äußere Stegfläche
- 35: Durchgangsbohrung
- 36: innere Ringnut
- 37: äußere Ringnut
- 38: innere Ringnut
- 39: äußere Ringnut
- 40: innere Stegfläche
- 41: mittlere Stegfläche
- 42: äußere Stegfläche
- 43: vorgespannter Kolbeneinspannring
- 44: feststehender Kolbeneinspannring
- 45: konische Anschlagfläche
- 46: konische Anschlagfläche
- 47: Stegfläche
- 48: Stegfläche
- 49: Ringnut
- 50: Ringnut
- 51: Durchgangsbohrung
- 52: Stegfläche
- 53: Stegfläche
- 54: Stegfläche
- 55: Stegfläche
- 56: Elektromagnet
- 57: Elektromagnet

## Patentansprüche

1. Feder-Dämpfer-Einheit für ein Kraftfahrzeug, bestehend aus einem zylindrischen, mit Druckluft gefüllten Gehäuse (1) und einem doppeltwirkenden Kolben (5, 5') mit einer einseitigen Kolbenstange (6, 6'), wobei das Gehäuse (1) und die Kolbenstange (6, 6') zwischen einem Karosserieteil und einem Rad des Kraftfahrzeuges eingespannt sind und der Kolben (5, 5') den Zylinderraum des Gehäuses (1) in zwei Druckräume (10, 10', 11, 11') trennt und beide Druckräume (10. 10', 11, 11') zum Zwecke des Volumenausgleiches durch eine erste Überströmdrossel (13) und eine zweite Überströmdrossel (13) im Kolben (5, 5') miteinander verbunden sind, wobei beide Überströmdrosseln (13) jeweils aus einem Durchgang und einer oder mehreren federnden Dichtscheiben (23) besteht, in ihrer Durchflussrichtung gegensinnig zueinander angeordnet sind und die gesperrte Überströmdrossel (13) durch die freie Überströmdrossel (13) umgehbar ist, jeder Überströmdrossel (13) mehrere Durchgangsbohrungen (35, 51) zugeordnet sind, die sich in gleichmäßiger Verteilung auf einem gemeinsamen Teilkreis befinden und die im Bereich der Dichtscheiben (23) jeweils in eine Ringnut (36, 38, 49, 50) münden, wobei die Durchgangsbohrungen (35, 51) einer Überströmdrossel (13) als Schräglochbohrungen ausgebildet sind und von einem größeren Teilkreis einerseits zu einem kleineren Teilkreis andererseits verlaufen, wobei die Ringnut (36, 38, 49, 50) einer Überströmdrossel (13) und die Mündungen der Durchgangsbohrungen (35, 51) der anderen Überströmdrossel (13) jeder Seite durch eine ringförmige Stegfläche (41, 54, 55) voneinander getrennt sind und wobei die Dichtscheiben (23) mit ihrem größeren Durchmesserbereich auf die Stegflächen (41, 54, 55) dichtend aufliegen,
**dadurch gekennzeichnet, dass**
die Durchgangsbohrungen (35, 51) beider Überströmdrosseln (13) als Schräglochbohrungen ausgebildet sind und wechselweise von einem größeren Teilkreis einerseits zu einem kleineren Teilkreis andererseits verlaufen.

2. Feder-Dämpfer-Einheit nach Anspruch 1,
**dadurch gekennzeichnet, dass** die Dichtscheiben (23) jeder Überströmdrossel (13) *aus einem Federmaterial bestehen und* im Bereich ihres kleineren Durchmessers fest eingespannt sind.

3. Feder-Dämpfer-Einheit nach Anspruch 2,
**dadurch gekennzeichnet, dass** die Dichtscheiben (23) durch Deckelstücke (18, 19) oder Kolbeneinspannringe (43, 44) gegen die Stirnflächen des Kolbens (5, 5') verspannt sind und an den Deckelstücken (18, 19) oder den Kolbeneinspannringen (43, 44) konische Anschlagflächen (27, 32, 45, 46) ausgebildet sind.

4. Feder-Dämpfer-Einheit nach Anspruch 3,
**dadurch gekennzeichnet, dass** die Dichtscheiben (23) in ihrer Schließlage vorgespannt sind,
- durch einen unterschiedlichen radialen Abstand der inneren Stegflächen (28, 33) der Deckelstücke (18, 19) zu den inneren Stegflächen des Mittelstückes (20) zur Achse des Kolbens (6) und/oder
- durch eine gegenüber den Dichtscheiben (23) geringere Stärke der Abstandsscheiben (24).

5. Feder-Dämpfer-Einheit nach Anspruch 1,
**dadurch gekennzeichnet, dass** (-) *die beiden Überströmdrosseln (13) im gleichen radialen Abstand von der Mittelachse angeordnet sind und* die Durchgangsbohrungen (35, 51) der Überströmdrosseln (13) *auf jeder Seite des Kolbens (5, 5')* in eine Ringnut (36, 38, 49, 50) münden.

6. Feder-Dämpfer-Einheit nach einem oder mehreren der Ansprüche 2 bis 5,
**dadurch gekennzeichnet, dass** jeder Überströmdrossel (13) ein Elektromagnet (56, 57) zugeordnet ist.

## Claims

1. Spring/damper unit for a motor vehicle, consisting of a cylindrical housing (1) filled with compressed air and of a double-acting piston (5, 5') with a one-sided piston rod (6, 6'), the housing (1) and the piston rod (6, 6') being tensioned between a body part and a wheel of the motor vehicle, the piston (5, 5') separating the cylinder space of the housing (1) into two pressure spaces (10, 10', 11, 11'), and the two pressure spaces (10, 10', 11, 11') being connected to one another for the purpose of volume compensation by means of a first overflow throttle (13) and a second overflow throttle (13) in the piston (5, 5'), the two overflow throttles (13) each consisting of a passage and of one or more resilient sealing discs (23) and being arranged opposite to one another in terms of their throughflow direction, and the blocked overflow throttle (13) being capable of being bypassed by the free overflow throttle (13), each overthrow throttle (13) being assigned a plurality of passage bores (35, 51) which are located in a uniform distribution on a common reference circle and which in each case issue into an annular groove (36, 38, 49, 50) in the region of the sealing discs (23), the passage bores (35, 51) of one overflow throttle (13) being designed as oblique-hole bores and running from a larger reference circle, on the other hand, to a smaller reference circle, on the other hand, the annular groove (36, 38, 49, 50) of one overflow throttle (13) and the issues of the passage bores (35, 51) of the other overflow throttle (13) of each side being separated from one another by means of an annular web surface (41, 54, 55), and the sealing discs (23) lying with their larger diametrical region sealingly on the web surfaces (41, 54, 55), **characterized in that** the passage bores (35, 51) of both overflow throttles (13) are designed as oblique-hole bores and run alternately from a larger reference circle, on the one hand, to a smaller reference circle, on the other hand.

2. Spring/damper unit according to Claim 1, **characterized in that** the sealing discs (23) of each overflow throttle (13) consist of a spring material and are firmly tensioned in the region of their smaller diameter.

3. Spring/damper unit according to Claim 1, **characterized in that** the sealing discs (23) are braced against the end faces of the piston (5, 5') by means of cover pieces (18, 19) or piston tension rings (43, 44), and conical stop faces (27, 32, 45, 46) are formed on the cover pieces (18, 19) or on the piston tension rings (43, 44).

4. Spring/damper unit according to Claim 3, **characterized in that** the sealing discs (23) are prestressed in their closing position
- by means of a different radial distance of the inner web surfaces (28, 33) of the cover pieces (18, 19) from the inner web surfaces of the middle piece (20) with respect to the axis of the piston (6) and/or
- by means of a smaller thickness of the spacer discs (24), as compared with the sealing discs (23).

5. Spring/damper unit according to Claim 1, **characterized in that** the two overflow throttles (13) are arranged at the same radial distance from the mid-axis, and the passage bores (35, 51) of the overflow throttles (13) issue into an annular groove (36, 38, 49, 50) on each side of the piston (5, 5').

6. Spring/damper unit according to one or more of Claims 2 to 5, **characterized in that** each overflow throttle (13) is assigned an electromagnet (56, 57).

## Revendications

1. Unité d'amortissement à ressort pour un véhicule automobile, se composant d'un carter cylindrique (1) rempli d'air comprimé et d'un piston à double action (5, 5') avec une tige de piston unilatérale (6, 6'), le carter (1) et la tige de piston (6, 6') étant serrés entre une partie de carrosserie et une roue du véhicule automobile et le piston (5, 5') séparant la chambre du cylindre du carter (1) en deux chambres de pression (10, 10', 11, 11') et les deux chambres de pression (10, 10', 11, 11') étant connectées l'une à l'autre dans le piston (5, 5') par un premier étranglement de trop-plein (13) et un deuxième étranglement de trop-plein (13) afin d'équilibrer le volume, les deux étranglements de trop-plein (13) se composant à chaque fois d'un passage et d'un ou de plusieurs disques d'étanchéité élastiques (23), étant disposés en sens inverse l'un par rapport à l'autre dans leur direction de passage du flux, et l'étranglement de trop-plein bloqué (13) pouvant être contourné par l'étranglement de trop-plein libre (13), plusieurs alésages traversants (35, 51) étant associés à chaque étranglement de trop-plein (13), lesquels sont répartis uniformément sur un cercle partiel commun et débouchent dans la région des disques d'étanchéité (23) à chaque fois dans une rainure annulaire (36, 38, 49, 50), les alésages traversants (35, 51) d'un étranglement de trop-plein (13) étant réalisés en tant qu'alésages à trous obliques et s'étendant depuis un cercle partiel plus grand d'une part vers un cercle partiel moins grand d'autre part, la rainure annulaire (36, 38, 49, 50) d'un étranglement de trop-plein (13) et les embouchures des alésages traversants (35, 51) de l'autre étranglement de trop-plein (13) étant séparées les unes des autres de chaque côté par une surface de nervure de forme annulaire (41, 54, 55) et les disques d'étanchéité (23) s'appliquant hermétiquement avec leur région de plus grand diamètre contre les surfaces de nervure (41, 54, 55),
**caractérisée en ce que**
les alésages traversants (35, 51) des deux étranglements de trop-plein (13) sont réalisés en tant qu'alésages à trous obliques et s'étendent alternativement d'un cercle partiel plus grand d'une part vers un cercle partiel plus petit d'autre part.

2. Unité d'amortissement à ressort selon la revendication 1,
**caractérisée en ce que** les disques d'étanchéité (23) de chaque étranglement de trop-plein (13) se composent d'un matériau élastique et sont serrés fermement dans la région de leur plus petit diamètre.

3. Unité d'amortissement à ressort selon la revendication 2,
**caractérisée en ce que** les disques d'étanchéité (23) sont serrés par des pièces de couvercle (18, 19) ou des bagues de serrage du piston (43, 44) contre les faces frontales du piston (5, 5') et des faces de butée (27, 32, 45, 46) sont réalisées sur les pièces de couvercle (18, 19) ou les bagues de serrage du piston (43, 44).

4. Unité d'amortissement à ressort selon la revendication 3,
**caractérisée en ce que** les disques d'étanchéité (23) sont précontraints dans leur position de fermeture,
- par une distance radiale différente des surfaces de nervure internes (28, 33) des pièces de couvercle (18, 19) aux surfaces de nervure internes de la pièce centrale (20) par rapport à l'axe du piston (5) et/ou
- par une épaisseur plus faible des disques d'espacement (24) par rapport aux disques d'étanchéité (23).

5. Unité d'amortissement à ressort selon la revendication 1,
**caractérisée en ce que** les deux étranglements de trop-plein (13) sont disposés à égale distance radiale de l'axe médian et les alésages traversants (35, 51) des étranglements de trop-plein (13) débouchent de chaque côté du piston (5, 5') dans une rainure annulaire (36, 38, 49, 50).

6. Unité d'amortissement à ressort selon l'une quelconque ou plusieurs des revendications 2 à 5,
**caractérisée en ce que** l'on associe un électroaimant (56, 57) à chaque étranglement de trop-plein (13).
